# EUROPEAN PATENT APPLICATION

(11) **EP 3 199 291 A1**
(43) Date of publication of application: **02.08.2017**
(21) Application number: 17152783.1
(22) Date of filing: 24.01.2017
(51) Int. Cl.: B23K 31/02, B23K 37/04, B23K 37/053, B21C 37/08, B23K 101/06

(54) **ALIGNMENT UNIT FOR A PROFILING LINE**

(30) Priority: 27.01.2016 IT UB20160289
(71) Applicant: FIVES OTO S.P.A., 42022 Boretto, Reggio Emilia (IT)
(72) Inventor: BARBOLINI, Fabio, 41012 SOLIERA (MODENA) (IT); MICALI, Luciano, 23824 DERVIO (LECCO) (IT); ANESI, Andrea, 42049 PARMA (IT)
(74) Representative: Casadei, Giovanni

(57) **Abstract**

The invention relates to an alignment means (60) for a profiling line. The alignment means (60) is structured for aligning two edges of the item (P) on which a welding must be performed by welding means (4).

## Description

### DESCRIPTION

The present invention relates to an alignment unit for a profiling line.

The invention relates in particular to profiling lines for the production of welded tubular profiles. In substance, a profiling line allows a tubular profile to be produced starting from a steel strip which, in line, is progressively bent back about its own longitudinal axis until it assumes a tubular conformation wherein the longitudinal edges of the strip are arranged alongside one another in the upper zone of the profile. For this purpose, a profiling line substantially comprises a series of bending units, arranged in succession, each of which comprises at least two profiling rollers. The progressive bending of the profile takes place by making the strip pass through the various bending units which, by contact, progressively deform it. The strip slides continuously through the bending units, being progressively deformed.

Still in line, i.e. while the profile advances continuously, the longitudinal edges are welded together. The profile is subsequently cut into portions of a pre-established length, according to known processes. The whole production is performed in a continuous line, i.e. while the profile advances.

Currently the welding of the longitudinal edges of the starting strip is performed at the exit from the last bending unit of the line, at a station equipped with a welding head that remains stationary above the joining zone of the longitudinal edges. The longitudinal edges are substantially free, i.e. they are placed alongside each other only due to the effect of the bending undergone by the initial strip. Therefore, it is not infrequent that the longitudinal edges have undulations or zones in which they are at a higher mutual distance than other zones. This means that the welding bead is not formed in a continuous and constant way, but may have discontinuities in terms of thickness and width which may compromise the structural strength of the final profile and substantially complicate any subsequent reduction operations of the bead itself. The instability of the longitudinal edges, and the consequent welding problems, are more accentuated for profiles that have a high ratio between diameter and thickness.

The object of the present invention is to offer an alignment device which allows the drawbacks summarized above to be overcome.

An advantage of the alignment unit according to the present invention is that it allows a uniform and continuous welding bead to be achieved.

Another advantage of the alignment unit according to the present invention is that it can be adopted in profiling lines that are already operating, with limited adaptation interventions.

Further characteristics and advantages of the present invention will become more apparent in the following detailed description of an embodiment of the present invention, illustrated by way of non-limiting example in the attached figures, in which:
- figure 1 generally shows a profiling line for the production of welded tubular profiles;
- figure 2 shows the alignment unit according to the present invention in axonometric view;
- figure 3 shows the alignment unit of figure 2 from an observation point below the profile (P) being processed;
- figure 4 shows the alignment unit of figure 2 from an observation point located on the longitudinal axis of the profile (P);

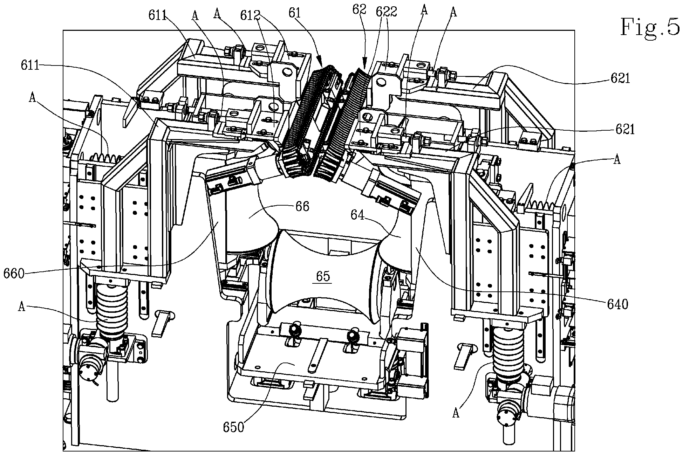

- figure 5 shows the alignment unit according to the present invention in axonometric view from a further point of view, in absence of the profile (P);

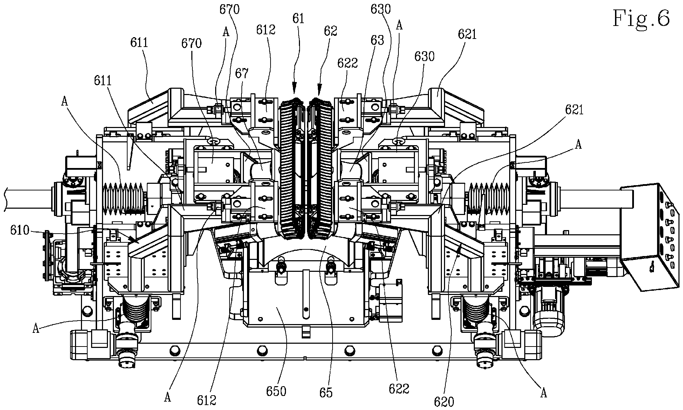

- figure 6 shows the alignment unit according to the present invention in axonometric view from a further point of view, in absence of the profile (P);

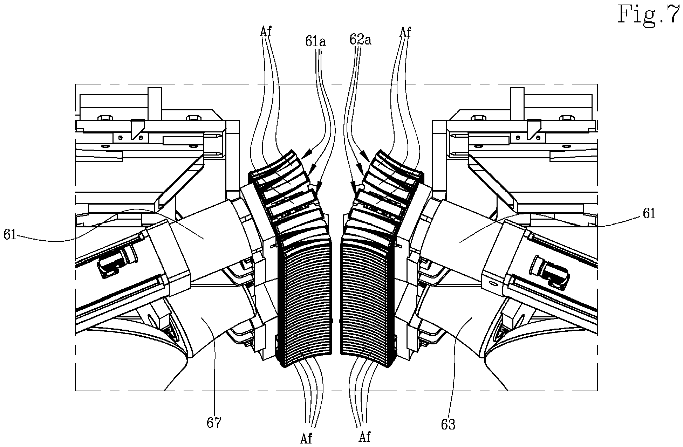

- figure 7 shows the alignment unit according to the present invention in axonometric view from a further different point of view, in absence of the profile (P).

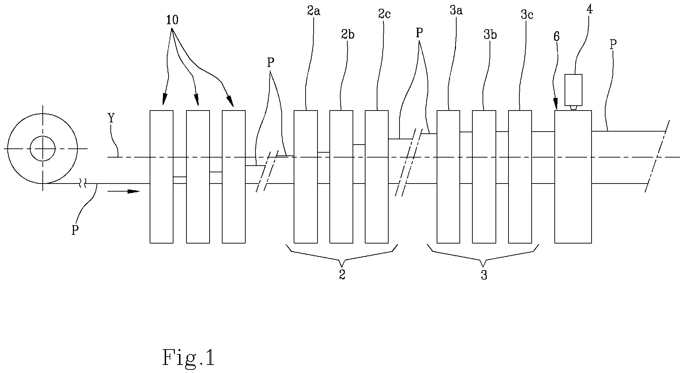

The profiling line, illustrated generally in figure 1, leads the starting strip in advancement along a generally horizontal advancement direction (Y). As a person skilled in the art knows, the starting strip is progressively curved upwards about its own longitudinal axis, assuming a tubular conformation in which the two longitudinal edges (E1, E2) are placed alongside one another and welded. In the following description the starting strip is for convenience purposes indicated as "profile" as of when it starts to be deformed, curving upwards about its own longitudinal axis. In the final profile (P) the longitudinal edges (E1,E2) of the starting strip are, welded together, in the upper part of the profile (P).

Generally, the starting strip advances along the advancement direction (Y) changing its conformation from substantially flat to tubular, due to the effect of the deforming action exerted along the line by the operating units (10,2a,2b,2c,3a,3b,3c...). With the exception of some small deviations connected with the process, the advancement direction (Y) substantially coincides with the longitudinal direction or axis of the profile (P).

The progressive curving of the strip about its own longitudinal axis takes place preferably upwards, i.e. by lifting the longitudinal edges (E1,E2) and placing them alongside one another in the upper part of the profile (P). This allows the simplification of the welding operations and subsequent removal of the welding bead, which can take place, still in line, substantially above the profile (P) itself.

The profiling line comprises a plurality of operating units (10,2a,2b,2c,3a,3b,3c,...) each of which is provided with two or more rollers shaped and arranged so as to produce on the profile (P) a certain curvature about its own longitudinal axis. The operating principle of the various operating units and the way in which they produce the overall curvature of the profile (P) are widely known to a person skilled in the art.

The profiling line comprises a guide portion (3) that comprises a plurality of guide units (3a,3b,3c,...). Such guide units lead the strip, now closed in a tubular configuration, to welding means (4), provided to perform a welding of the longitudinal edges of the strip.

The alignment unit (6) according to the present invention can be placed downstream of the guide portion (3), substantially at the welding means (4). The alignment unit comprises alignment means (60), which is structured for aligning two longitudinal edges (E1,E2) of the profile (P) on which a welding must be performed by welding means (4). The alignment means (60) has the function of making the edges of the profile (P) rectilinear and stable. This allows the welding of the edges to be facilitated and the characteristics of the welding bead to be improved.

In the embodiment illustrated, the alignment means (60) comprises a pair of guide elements (61,62) generally rectilinear, structured and arranged for entering into contact with at least one zone of the edges (E1,E2) of the profile (P). For example, the guide elements (61,62) are structured for coming into contact with a longitudinal portion of the edges (E1,E2). The guide elements (61,62) are parallel to one another or converging along the advancement direction and are predisposed for operating on a respective edge of the profile (P). Arranging the guide elements (61,62) converging between one another along the advancement direction allows the edges (E1,E2) to be mutually accompanied towards one another.

In a possible embodiment, the guide elements (61,62) could be in the form of static surfaces, located so as to come into contact with the zones of the edges (E1,E2) of the profile (P). The guide elements could be solidly constrained to one another.

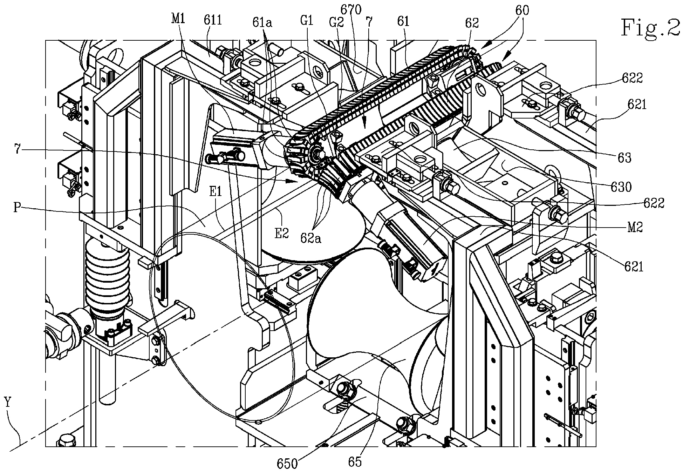

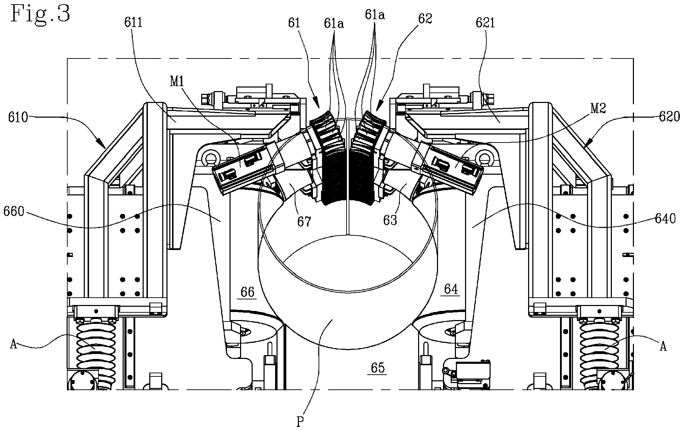

In the embodiment shown each guide element (61,62) comprises a plurality of cursors (61 a,62a) movable along a path closed in a loop. The paths of the cursors (61a,62a) could be converging to one another or directed parallel to the longitudinal direction (Y). The cursors (61 a,62a) may be associated for example with an articulated chain, which is closed in a loop and movable by gears in a way that is known to a person skilled in the art. Figures 2,3,4 schematically show two rotary actuators (M1,M2) each of which is associated with a motor gear (G1,G2) of an articulated chain with which the cursors (61 a,62a) are associated.

At least an active portion of the path followed by the cursors (61 a,62a) is arranged in proximity to the edges (E1,E2) of the profile (P) itself, so that along such active portion the cursors (61a,62a) may be arranged in contact with the profile (P) following it in a synchronous way as it advances. In substance, the cursors (61 a,62a) are activated in advancement along the active portion of their own path at the same speed as the profile (P). This allows any sliding or slithering on the surface of the profile (P) to be prevented, even in presence of a determined pressure exerted by the cursors (61 a,62a) on the surface itself.

Each cursor (61 a,62a) has an active face (Af) which is intended to come into contact with the profile (P) along the active portion of the path. Such face has, on a vertical sectional plane perpendicular to the longitudinal axis of the profile (P), a profile counter-shaped to the outline of the profile (P). In other words, each cursor (61 a,62a) has an active face that has the same curvature as the profile (P) at least in the zone of the edges (E1,E2). In the embodiment illustrated, each cursor (61a,62a) exhibits a generally prismatic conformation comprising the active face (Af).

In the embodiment illustrated, the cursors (61a,62a) are distributed into two distinct groups. A first group of cursors (61 a) is intended to be positioned in contact with a first edge (E1) of the profile (P). A second group of cursors (61 b) is intended to be positioned in contact with a second edge (E2) of the profile (P). In other words, each group of cursors (61 a,62a), associated with its own chain or drive belt, takes the form of a track, in which the active portion is activated in synchronous sliding with the profile (P).

Preferably, the alignment unit comprises vertical adjustment means for allowing the vertical position of each guide element (61,62) to be adjusted. Preferably, such vertical adjustment means is structured for allowing the inclination of each guide element (61,62) to be adjusted on a vertical plane.

Preferably, the alignment unit comprises horizontal adjustment means for allowing the horizontal position of each guide element (61,62) to be adjusted. Preferably, such horizontal adjustment means is structured for allowing the inclination of each guide element (61,62) to be adjusted on a horizontal plane.

For this purpose, each guide element (61,62) may be advantageously associated with a respective support (610,620). Such supports (610,620) may be connected to a frame bearing the alignment unit.

Preferably, each support (610,620) is movable along a vertical direction, by actuators (A) known to a person skilled in the art, to allow the adjustment of the vertical position of the guide elements (61,62). Preferably, each support (610,620) comprises a pair of arms (611,621) movable independently from one another and arranged at opposite ends of the respective guide element (61,62) In this way the position of the guide elements (61,62) may also be adjusted by inclination on a vertical plane. In the embodiment shown, the arms (611,621) have an L-shaped conformation, with an upper cross portion connected to the respective guide element (61,62). Preferably, the connection between each arm (611,621) and the respective guide element (61,62) is performed through a shaped body (612,622) whose position can be adjusted along a horizontal direction. For this purpose, each shaped body (612,622) is provided with slots arranged horizontally through which it can be coupled to the respective arm (612,622), for example through screws. To facilitate the adjustment of its position, each shaped body (612,622) is provided with an actuator (A), for example a worm screw, structured for producing a movement directed vertically. The position of the guide elements (61,62) can therefore be adjusted on a vertical plane with the possibility to adjust also the inclination on a vertical plane.

Between the guide elements (61,62) it is possible to maintain a longitudinal slit (7) within which the welding means (4) can be arranged. The welding means (4) could however be positioned downstream of the alignment means. In the embodiment shown the two groups of cursors (61 a,62a) are separated by the longitudinal slit (7).

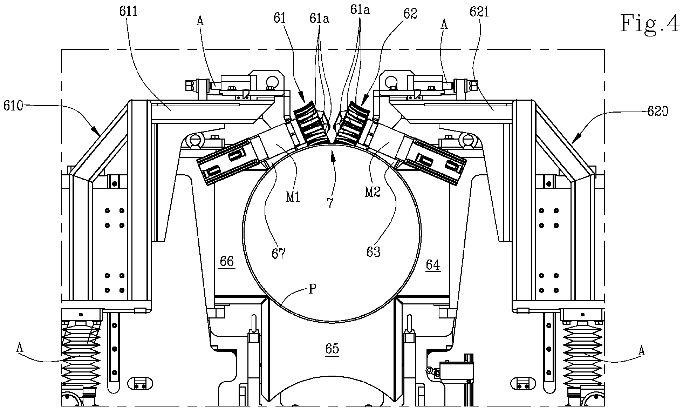

The alignment unit according to the present invention further comprises a plurality of shaped rollers (63,64,65,66,67). As can be seen in figure 4, the projection of the shaped rollers (63,64,65,66,67) on a plane perpendicular to the longitudinal axis of the profile (P) generally envelops a circular outline.

In the solution shown the shaped rollers comprise a lower roller (65), a first lateral roller (64), a second lateral roller (66), a first upper roller (63) and a second upper roller (67). The two lateral rollers and the two upper rollers are arranged symmetrically with respect to a vertical medium plane containing the longitudinal direction (Y).

The shaped rollers have axes of rotation which, preferably, lie on the same vertical plane. This allows the overall dimensions of the structure along the longitudinal direction (Y) to be reduced.

The shaped rollers are movable in an interrelated or independent way with respect to one another so as to change the position in space of their axis of rotation. This allows the outline enveloped by the shaped rollers to be changed. For this purpose, each shaped roller is associated with a support that is movable with respect to the frame bearing the alignment unit.

Preferably the lateral rollers are movable simultaneously and symmetrically with respect to a vertical plane containing the longitudinal axis (Y) of the profile (P).

In particular the lower roller (65) is associated with a bracket support (650) whose position can be adjusted vertically. The movement of the bracket support (650) may be obtained by actuator means known to a person skilled in the art.

The two lateral rollers (64,66) are each mounted on a respective bracket support (640,660) whose position can be adjusted horizontally. The movement and adjustment of the bracket supports (640,660) may be obtained by actuator means known to a person skilled in the art.

The two upper rollers (63,67) are each mounted on a respective bracket support (630,670) whose position can be adjusted horizontally. The movement and adjustment of the bracket supports (630,670) may also be obtained by actuator means known to a person skilled in the art.

By way of example the figures show a plurality of actuators, all indicated with the letter A, to be used for adjusting the position of the brackets mentioned above. Such actuators may for example be oil dynamic cylinders, screw mechanisms, rack mechanisms or the like.

The alignment unit according to the present invention provides important advantages. Above all, it allows the longitudinal edges of the profile to be perfectly aligned, which edges assume a rectilinear and parallel configuration. This allows optimal welding to be achieved. Furthermore, the alignment unit may also be adopted in profiling lines that are already operating, with limited adaptation interventions.

## Claims

1. An alignment unit for a profiling line, **characterized by** comprising alignment means (60), which alignment means (60) is so structured as to align two edges (E1, E2) of a tubular profile (P) parallel and arranged alongside to one another.

2. An alignment unit according to claim 1, wherein the alignment means (6) comprises a pair of generally straight guide elements (61,62) which are so structured and arranged as to come into contact with at least one edge area (E1, E2) of the profile (P).

3. An alignment unit according to claim 2, wherein the guide elements (61,62) comprise a plurality of cursors (61 a, 62a) movable along a path closed in a loop and directed parallel to a longitudinal direction (Y).

4. An alignment unit according to claim 2, wherein the cursors (61 a, 62a) are associated to an articulated chain, which is closed in a loop and movable by rotary actuators (M1, M2).

5. An alignment unit according to claim 2, wherein each cursor (61a, 62a) has an active face (Af) which is destined to come into contact with the section bar (P) along the active portion of the path.

6. An alignment unit according to claim 5, wherein the active face (Af) exhibits, on a vertical section plane perpendicular to the longitudinal axis of the profile (P), an outline which is counter-shaped to the outline of the profile (P).

7. An alignment unit according to claim 5, wherein each cursor (61a, 62a) exhibits an overall prismatic conformation comprising the active face (Af).

8. An alignment unit according to claim 4, wherein the cursors (61 a, 62a) are distributed in two distinct groups; a first group of cursors (61 a) is intended to be positioned in contact with a first edge (E1) of the profile (P); a second group of cursors (61 b) is intended to be positioned in contact with a second edge (E2) of the profile (P).

9. An alignment unit according to claim 2, wherein the guide elements (61,62) are separated by a longitudinal slot (7).

10. An alignment unit according to claim 8, wherein the first and second group of cursors (61 a, 62a) are separated by a longitudinal slot (7).

11. An alignment unit according to claim 2, comprising vertical adjustment means which is so structured as to allow adjustment of the vertical position of each guide element (61,62).

12. An alignment unit according to claim 2, comprising vertical adjustment means being so structured as to allow adjustment of the inclination of each guide element (61,62) on a vertical plane.

13. An alignment unit according to claim 2, comprising horizontal adjusting means being structured for allowing adjustment of the horizontal position of each guide element (61,62).

14. An alignment unit according to claim 2, comprising horizontal adjusting means being structured for allowing adjustment of the inclination of each guide element (61,62) on a horizontal plane.
